Europäisches Patentamt

European Patent Office

Office européen des brevets

(19)

(11) Numéro de publication : **0 084 012**
**B1**

(12) **FASCICULE DE BREVET EUROPÉEN**

(45) Date de publication du fascicule du brevet :
02.12.87

(51) Int. Cl.⁴ : **B 25 J   5/00**, B 62 D 57/02

(21) Numéro de dépôt : 83400054.9

(22) Date de dépôt : 10.01.83

(54) **Robot à pattes grimpeur.**

(30) Priorité : 11.01.82 FR 8200275

(43) Date de publication de la demande :
20.07.83 Bulletin 83/29

(45) Mention de la délivrance du brevet :
02.12.87 Bulletin 87/49

(84) Etats contractants désignés :
BE DE FR GB IT NL SE

(56) Documents cités :
EP-A- 0 010 034
EP-A- 0 020 272
FR-A- 1 205 668
FR-B- 2 336 056
US-A- 3 409 854

(73) Titulaire : **INTERNATIONAL ROBOTIC ENGINEERING INC.**
**Suite 1310 485 Madison avenue**
**New York, N.Y. 10020 (US)**

(72) Inventeur : **Kroczynski, Patrice Alain**
**120 rue Camille Groult**
**F-94400 Vitry (FR)**

(74) Mandataire : **Haft, Uwe Michael**
**Postfach 14 02 46**
**D-8000 München 5 (DE)**

## Description

La présente invention concerne un appareil autonome capable de se déplacer le long d'une surface non horizontale, par exemple le long d'une surface verticale, ou en plafond.

Une application de tels appareils concerne la peinture ou le décapage de coques de navires.

Le document US-A-3.409.854 décrit un appareil destiné à cet usage, et qui comprend un premier équipage équipé de trois électro-aimants, un second équipage équipé d'un électro-aimant unique, et des moyens de liaison comportant une pièce intermédiaire qui peut coulisser par rapport au premier équipage et qui peut tourner par rapport au second équipage.

Cette pièce intermédiaire porte des outils de traitement de la surface. On conçoit qu'en activant séparément et successivement les électro-aimants du premier équipage et celui du second équipage tout en faisant coulisser ou tourner la pièce intermédiaire, on peut déplacer à volonté l'appareil le long d'une surface plane. Un tel appareil ne peut opérer que sur des surfaces à très faible courbure, en effet seuls les jeux entre les différentes pièces de l'appareil permettent d'obtenir un contact correct des électro-aimants avec la surface support si celle-ci n'est pas tout à fait plane, et si ces jeux sont trop importants ils peuvent lors d'un déplacement amener un des électro-aimants à une distance de la surface support telle qu'il n'y ait pas d'adhérence et que l'appareil ne soit pas soutenu de façon correcte. Ce risque est augmenté par le fait que le second équipage est équipé d'un seul électro-aimant, ce qui assure une stabilité réduite, si l'on veut éviter un poids trop élevé.

Le fait que les outils soient solidaires de la pièce intermédiaire a pour inconvénient que les outils ne peuvent être déplacés pour traiter la surface qu'en même temps qu'un des équipages. Ils ne peuvent faire qu'un mouvement de translation, ou à la rigueur de rotation, ce qui cause des pertes de temps si les forces mises en jeu sont peu importantes, et on ne peut utiliser la force de maintien des deux équipages en même temps, ce qui est une limitation en cas de forces importantes.

Le brevet FR-A-2.221.243 décrit un appareil comportant deux équipages qui peuvent se déplacer l'un par rapport à l'autre par translation relative dans deux directions, sans rotation. Chaque équipage est équipé de deux électro-aimants. Les équipages peuvent être articulés ou incurvés à l'avance pour s'adapter à la courbure d'une surface. Cet appareil présente les mêmes inconvénients que le précédent en ce qui concerne la stabilité lors des mouvements, d'autre part il est mal adapté au déplacement sur des surfaces à courbure variable, telles qu'une coque de navire car la présence d'articulation nuit à la rigidité et alourdit l'ensemble, et il est gênant de devoir changer d'équipage à chaque changement de courbure de la surface.

En outre les équipages ne peuvent pas changer d'orientation, puisqu'aucune rotation n'est possible sur un outil de traitement porté par l'un ou l'autre équipage qui conserve donc lui aussi la même orientation, ou bien, s'il peut osciller autour d'une position moyenne, ses orientations possibles sont limitées par l'angle de ses oscillations.

Dans FR-A-1.205.668 est décrit un engin de transport destiné à des déplacements sur sol horizontal et dont la structure est à peu près la même que celle de FR-A-2.221.243, excepté le fait que chaque équipage porte quatre pieds extensibles. Cet engin peut donc se déplacer sur un sol irrégulier mais il est dépourvu de moyens pour s'agripper sur une surface à forte pente, et également il ne porte pas d'outil.

Le document EP-A-00 100 34 décrit un appareil comportant un équipage central et deux équipages auxiliaires, qui peuvent se déplacer séparément par rapport à l'équipage central, soit en rotation autour d'un axe parallèle à la surface support, soit en translation suivant une direction parallèle à la même surface et tendant à les rapprocher ou les écarter de l'équipage central, soit encore, en pivotant autour d'un axe parallèle à la surface support. La marche normale de cet appareil comporte des déplacements successifs de chacun des équipages pendant que les deux autres sont fixés sur la surface support, d'où il résulte que les déplacements sont lents. Il paraît possible, en théorie, de déplacer les deux équipages auxiliaires en même temps en prenant appui sur le seul équipage central, une telle façon de procéder, qui n'est ni décrite ni suggérée par ce document, ne permet, au mieux, que des déplacements de très faible amplitude à chaque fois du fait de la faible surface d'appui de l'équipage central, qui conduit à des effets de couple et de porte-à-faux importants dès que les deux équipages auxiliaires s'écartent d'une disposition symétrique, si bien que les déplacements ne seraient pas plus rapides que si l'on suivait la marche décrite dans ce document.

D'autre part, le document EP-A-00 100 34 prévoit bien que l'appareil peut être équipé de dispositifs d'inspection ou de contrôle, mais sans préciser où ils sont montés. Pour une inspection complète de la surface parcourue, il paraît préférable d'en avoir deux, un sur chaque équipage auxiliaire, à chaque extrémité de l'appareil, afin d'éviter l'existence d'une zone morte correspondant à la longueur minimale de l'appareil ou la nécessité de retournement de 180°, mais avoir besoin de deux dispositifs de traitement ou contrôle est une complication. D'autre part un dispositif lié à un équipage auxiliaire n'explore qu'une zone étroite pendant une grande partie du temps, d'où un rendement médiocre.

Pour ces raisons, l'appareil de ce document est mal adapté au traitement rapide de surfaces étendues.

Ainsi, il n'existe pas, à la connaissance de l'inventeur, d'appareil qui puisse se déplacer rapidement et de façon autonome le long d'une surface à forte pente et à courbure variable.

Le but de l'invention est de fournir un tel appareil qui sort de construction très simple et de grande sécurité.

Un autre but de l'invention est de fournir un tel appareil qui permette d'obtenir à la fois une grande vitesse lors du balayage d'étendues importantes en mettant en jeu des forces relativement faibles et une grande sécurité lors de traitements de la surface mettant en jeu des forces importantes.

Un autre but encore de l'invention est de fournir un tel appareil qui soit facilement utilisable en tant que robot autonome.

La présente invention fournit donc un appareil autonome capable de se déplacer le long d'une surface non horizontale et comprenant un premier équipage pourvu de premiers moyens de maintien capables de fixer l'appareil sur la surface de façon amovible et comportant plusieurs dispositifs d'adhérence formant un premier polygone ; un second équipage pourvu de seconds moyens de maintien capables de fixer l'appareil sur la surface de façon amovible, ces seconds moyens de maintien comportant également plusieurs dispositifs d'adhérence formant un second polygone qui peut se déplacer à l'intérieur du premier polygone ; des moyens permettant d'obtenir un déplacement relatif, par translation et par rotation dans un plan parallèle à la surface des premier et second équipages ; et des moyens capables de déplacer au moins un desdits équipages par rapport à ses propres moyens de maintien dans une direction perpendiculaire à la surface, ledit appareil étant pourvu d'un outil de traitement ou d'inspection, caractérisé en ce que le premier polygone est sensiblement indéformable, en ce qu'il est prévu des moyens pour limiter les déplacements relatifs des équipages pour que le centre des dispositifs d'adhérence du premier polygone se trouve toujours à l'intérieur du second polygone ou à faible distance de celui-ci, en ce que l'outil de traitement ou d'inspection est monté de façon à pouvoir exécuter un mouvement pivotant par rapport audit premier équipage.

Suivant une modalité intéressante de l'invention ledit outil de traitement ou d'inspection est relié à l'un des deux équipages par un bras robotique articulé à plusieurs articulations pourvues chacune de moyens de commande.

Toutefois, suivant une modalité préférée, ledit outil de traitement ou d'inspection est relié au second équipage par un bras passant au-dessus du premier équipage, dont les moyens permettant d'obtenir le déplacement relatif par rotation des deux équipages sont calculés pour permettre d'obtenir également du mouvement de translation et rotation du bras portant l'outil par rapport au premier équipage.

Dans les deux cas, avantageusement, ledit bras portant l'outil, porte, en outre, un dispositif d'adhérence supplémentaire.

Dans l'un ou l'autre mode d'exécution, on prévoit de préférence que les moyens capables de déplacer un équipage dans une direction perpendiculaire à la surface par rapport aux moyens de maintien reliés à cet équipage sont portés par le premier équipage.

Dans une réalisation où l'appareil comporte un ordinateur de commande, l'appareil est équipé de capteurs sensibles aux translations et rotations relatives des deux équipages et l'ordinateur est équipé d'une mémoire capable d'enregistrer ces translations et rotations, ainsi que les périodes d'actionnement des différents moyens de maintien, l'ordinateur étant également équipé de moyens pour déduire de ces données des indications sur le mouvement résultant de l'appareil et sur sa position actuelle.

Suivant deux réalisations intéressantes, qui peuvent être utilisées simultanément, on prévoit que l'outil est solidaire de moyens créant un courant d'eau dans une direction perpendiculaire à la paroi en s'écartant de celle-ci pour engendrer par réaction une force tendant à appuyer l'outil contre la surface et que les moyens de maintien comprennent des aimants permanents associés à une chambre de pression variable, la paroi de cette chambre qui est tournée vers la surface étant constituée par une paroi souple qui forme ventouse quand la chambre est en dépression, et qui écarte les aimants de la surface quand la chambre est en surpression.

L'invention va maintenant être exposée plus en détail à l'aide d'exemples pratiques donnés à titre non limitatif et illustrés par les dessins parmi lesquels :

Fig. 1   représente un robot vu de dessus avec quatre vérins sur la structure principale, et deux modules de travail ;

Fig. 2   représente le même robot vu en élévation ;

Fig. 3 et 4   représentent une succession de six positions nécessaires pour effectuer un pas ;

Fig. 5   représente l'organisation électronique de commande du robot ;

Fig. 6   représente le schéma de câblage pneumatique du robot ;

Fig. 7   montre un autre robot vu de dessus ;

Fig. 8   représente un dispositif de translation et de rotation de l'équipage mobile.

Fig. 9   représente une ventouse en coupe ;

Fig. 10   représente un outil vu de côté.

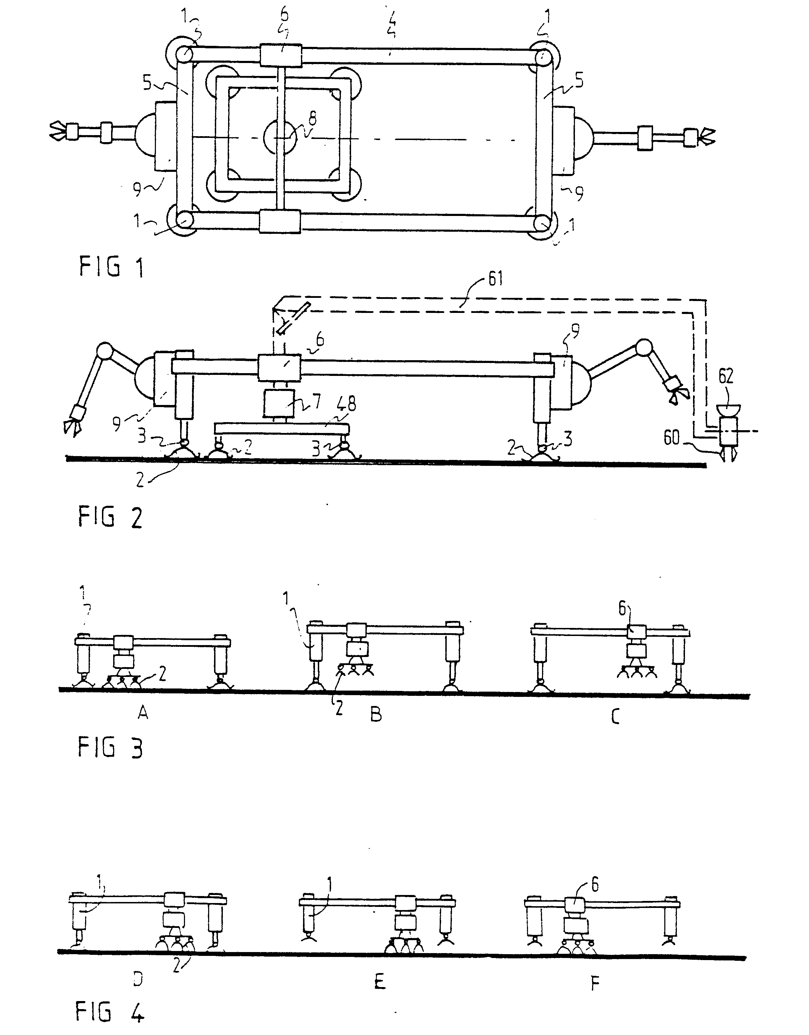

Selon les figures 1 à 6, quatre vérins 1 sont munis, en bout de tige, d'une ventouse pneumatique 2 par l'intermédiaire d'une rotule 3. Il est bien entendu qu'on peut prévoir aussi des ventouses magnétiques (ou électro-aimants) ou des ventouses mixtes combinant l'effet d'une ventouse pneumatique et d'une ventouse magnétique.

Les vérins sont rendus solidaires par l'intermédiaire d'une structure principale comportant deux poutres longitudinales 4 et deux poutres transversales 5 et constituant le premier équipage.

Cette structure de travail est nécessaire pour obtenir une stabilité suffisante du robot lors de

travaux mettant en œuvre des efforts robot/paroi importants.

Le second équipage 8 est constitué de quatre poutres formant un palonnier rectangulaire 48 relié aux poutres 4 par un dispositif coulissant 6 doté d'un système motorisé de translation par crémaillère, ce système pouvant également comporter des vérins, des chaînes, etc. Entre le dispositif coulissant 6 et le palonnier est intercalé un actionneur 7 qui assure la rotation du palonnier autour d'un axe perpendiculaire à son plan.

Le palonnier porte, par l'intermédiaire de rotules 3 des ventouses du même type magnétique que celles décrites plus haut. Ces ventouses forment un rectangle dont le centre est astreint à se déplacer à l'intérieur du rectangle, plus grand formé par les ventouses liées au premier équipage. Dans l'exemple décrit, qui correspond au mode de réalisation préféré, ce sont les ventouses du rectangle extérieur qui sont liées aux vérins, mais il est évidemment possible de placer les vérins sur les ventouses intérieures, cependant cette disposition demande une plus grande précision dans l'actionnement des vérins. Si la surface est de forme très irrégulière, il est même possible de prévoir des vérins pour toutes les ventouses.

Sur les poutres 5, il est prévu un dispositif de fixation pour les bras de travail 9. Ces bras, du type à articulation robotique avec poignet à changement automatique d'outils, permettent au robot d'effectuer ses missions. Un ratelier porte-outils est prévu dans le coffret du bras de travail 9.

Les vérins sont actionnés pneumatiquement, la structure de travail formée par les poutres 4 et 5 permet, dans une autre variante, de fixer des vérins à vis.

Pour avancer dans une direction, le robot peut effectuer successivement les opérations suivantes (voir figures 3 et 4).

A. Position de départ, ventouses de vérins 1 en prise, vérins 1 en position basse, ventouses du second équipage en contact avec la paroi.

B. Actionnement des vérins 1, arrêt de la dépression dans les ventouses du second équipage mobile. Les vérins 1 viennent en position d'extension.

C. Translation du second équipage d'un côté à l'autre du robot. C'est la longueur de cette translation qui détermine le pas du robot.

D. Les vérins 1 sont amenés vers une position rétractée de manière à amener les ventouses du second équipage en contact avec la paroi, et mise de ces ventouses en dépression. (Dans le cas de ventouses magnétiques, cela correspond à l'aimantation maximum).

E. Arrêt de la dépression dans les ventouses des vérins 1. Vérins 1 en position (position haute), le robot reste en appui uniquement sur les ventouses du second équipage mobile.

F. Translation de la structure principale, par rapport au second équipage, d'un côté à l'autre. Après cette action, on se retrouve dans la position initiale (A), et le processus peut recommencer.

Il est à noter que la position de travail en maximum de stabilité est la position où les quatre ventouses extérieures sont en prise. Pour des travaux légers comme la peinture, on peut travailler en quasi-continu. Pour ce faire, la translation (F) sera exécutée à vitesse lente, alors que les autres mouvements seront exécutés à vitesse rapide. Cette façon de procéder permet d'utiliser le degré de liberté translation du robot comme degré de liberté de l'outil, donc de diminuer la complexité et le coût du bras robotique 9, mais elle ne convient pas pour le grattage, par exemple, qui demande des efforts importants au niveau de l'outil. Dans ce cas, il est préférable d'opérer à l'arrêt. On peut même mettre en prise toutes les ventouses des deux équipages.

Pour orienter sa progression dans une direction, le robot peut effectuer successivement les opérations suivantes :

1) vérins 1 en position d'extension, ventouses du premier équipage/travail en prise, ventouses du second équipage non activées,

2) translation du second équipage en position centrale — (au milieu des poutres avant et arrière) — de manière à faire coïncider l'axe transversal du robot avec l'axe de rotation du changement de cap,

3) amener des vérins en position rétractée 1 de manière à amener les ventouses du second équipage en prise avec la paroi,

4) rotation de l'actionneur 7 pour rotation au nouveau cap de la structure du robot,

5) amener des vérins 1 en position d'extension, de manière à mettre leurs ventouses en prise avec la paroi.

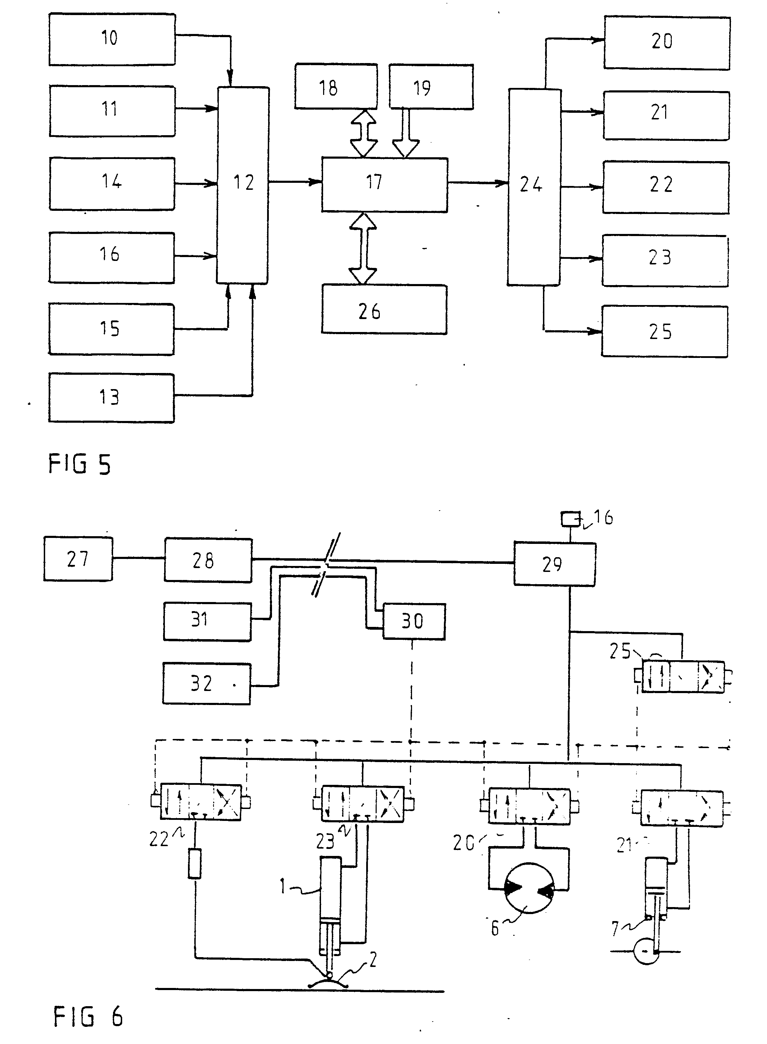

La figure 5 illustre les dispositions constructives des éléments de commande de l'appareil fonctionnant en robot.

Le capteur de déplacement longitudinal qui est un codeur 10 est relié à l'interface d'entrée 12. Différents types de codeurs peuvent convenir : codeur incrémental avec initialisateur, codeur absolu, capteur potentiométrique....

Chaque ventouse, à sa partie centrale, est munie d'un capteur de proximité. Ce capteur peut être un détecteur tout ou rien de proximité, une sonde à ultrasons, un relai à manque de pression...

C'est ce dispositif qui asservit le positionnement des vérins.

Ces capteurs 11 sont connectés avec l'interface d'entrée 12.

Dans le cas où un bras robotique est installé sur le robot, les capteurs de ces derniers 13 sont connectés sur l'interface d'entrée 12. En variante, un capteur de vitesse des moteurs des actionneurs ainsi que les capteurs de pression 16 du réservoir d'air et capteur de dépression 15 des ventouses sont connectées à l'interface 12.

L'interface d'entrée est reliée à un microprocesseur 17, lui-même doté d'une mémoire de lecture écriture 18, et d'une mémoire programme 19. Les distributeurs pneumatiques pour moteur 20, distributeur d'embrayage 21, distributeur pour mise en dépression des ventouses par venturi 22, distributeur de commande des vérins avant arrière 23 sont reliés à l'interface de sortie 24, de même que les actionneurs d'un éventuel bras robotique pour outils 25.

Dans le cas où le robot opère sur de très grandes surfaces, il est nécessaire d'adjoindre un système de positionnement 26 relié au microprocesseur par l'intermédiaire de portes d'entrée et sortie.

En effet, sur une paroi verticale ou inclinée, ou en plafond, le robot peut se positionner sans aide de système de positionnement complémentaire, uniquement par la méthode dite « estime ». Cette dernière consiste à faire la somme des vecteurs déplacement correspondant à chaque pas du robot, et d'en calculer la résultante. Cette somme est obtenue par l'intermédiaire des codeurs déplacement longitudinal et rotation. Cependant, on remarquera que chaque déplacement ou rotation est entâché d'une erreur due à différentes causes :

a) erreurs instrumentales

b) glissement des ventouses et déformation sur la paroi

c) jeux mécaniques

d) positionnements des rotules 3 des ventouses 2.

Il convient de noter que les vérins peuvent être immobilisés indépendamment l'un de l'autre en en un point quelconque de leur course, de façon à permettre l'adaptation de l'appareil à toute surface gauche, ce qui peut être aussi un facteur d'imprécision.

. Pour des surfaces relativement peu étendues, on peut programmer le robot à l'aide d'une mémoire programmable à effacement, par un mode classique d'apprentissage : syntaxeur, point-à-point, numérique. Pour des surfaces dépassant 100 mètres carrés environ dans la pratique industrielle de traitement de coques de navires, il devient nécessaire de faire appel à un système de positionnement, par exemple par reconnaissance de cible. Avantageusement, la cible est constituée par des bandes adhésives portant des réseaux du genre « code barres », orientés suivant deux directions perpendiculaires. Le robot porte, avantageusement sur son bras, un lecteur de type classique, insensible à la lumière extérieure, et dont les informations sont transmises au microprocesseur. De telles cibles sont disposées à intervalles réguliers définis en fonction de la précision du robot, et celui-ci se réinitialise sur chaque cible.

On peut également utiliser des systèmes de positionnement par ultrasons, par radiofréquence, par câble tendu (coordonnées polaires) — tous ces systèmes étant connus, on ne les décrira pas plus avant.

Dans le cas où le robot est utilisé en téléactivité, le système de positionnement 26, figure 5 est remplacé par le dispositif de télécommunication.

La figure 6, représente les liaisons fonctionnelles entre les différents composants pneumatiques dans le cas où on utilise l'air comprimé pour l'actionnement de robot. Il est bien précisé que d'autres modèles de l'invention peuvent être réalisés avec actionneurs électriques, hydrauliques ou autres.

Un compresseur 27 alimente un réservoir 28. L'air comprimé est dirigé par une canalisation souple jusqu'à un réservoir tampon 29 sur le robot. Ce réservoir peut être constitué par le châssis métallique creux du robot. Le capteur de pression 16 est branché sur le réservoir 29. Les distributeurs 22, 23, 20, 21, 25 alimentent les différents éléments 1, 2, 6, 7.

La carte de l'unité centrale à microprocesseur est connectée sur les bobines de commande des distributeurs. La télécommande ou ordres d'urgence sont établis sur le boîtier 31, et transmis par câble jusqu'au robot, ainsi que l'énergie électrique depuis le boîtier 32.

Une variante consiste à rendre le robot autonome par l'installation d'un générateur électrique et air comprimé sur la structure de travail. Dans ce cas, la télécommande s'effectue à distance par ondes radio, ultra-sons ou rayon optique.

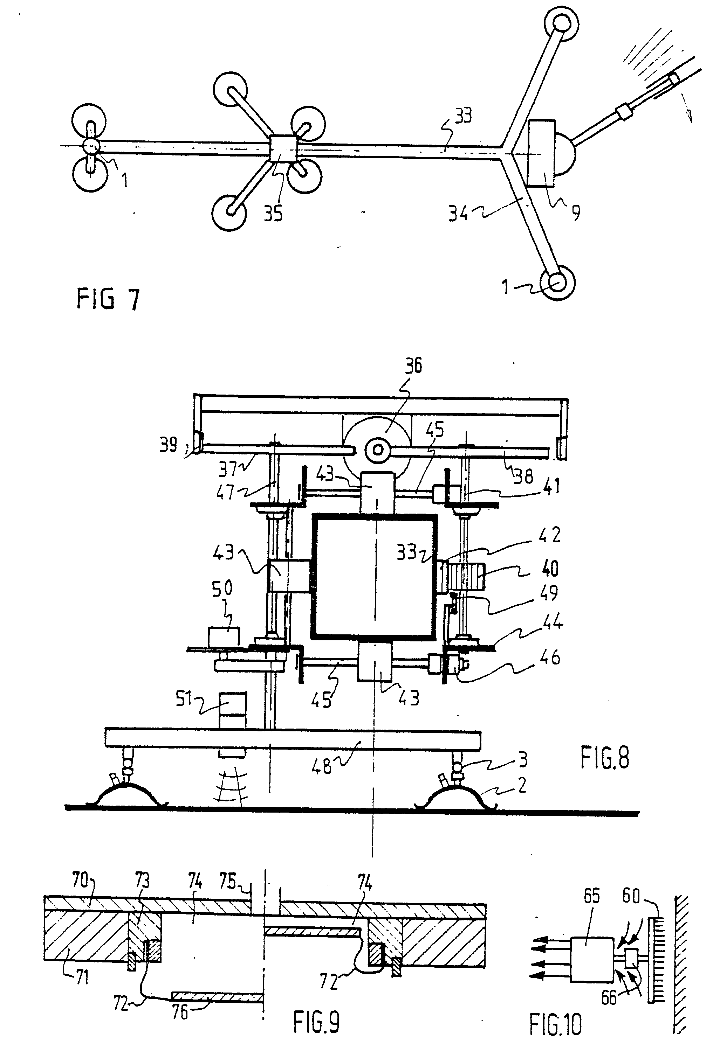

Une autre variante de l'invention est représentée figures 7 et 8.

Un premier équipage est constitué par une poutre métallique 33 reliée à une extrémité à un vérin portant deux ventouses, et à l'autre extrémité à deux poutres 34 munies chacune d'un vérin à ventouse 1.

Cette disposition constructive est particulièrement avantageuse dans le cas où l'on se limite à un outil robot. Le second équipage 35, possède deux ventouses rapprochées d'un côté, et deux ventouses écartées du côté opposé, il est mobile le long de la poutre 33. Il est à noter que l'on peut remplacer une ventouse par plusieurs plus petites couplées entre elles. La figure 6 est une coupe schématique perpendiculaire à l'axe de la poutre 33 de la figure 7. Un moteur pneumatique d'entraînement 36 peut entraîner à volonté l'un ou l'autre de deux pignons 37, 38, le pignon non entraîné étant immobilisé par une garniture de freinage 39.

Le pignon 37 entraîne un engrenage 40 par l'intermédiaire d'un axe 41, maintenu sur des paliers et grâce à une crémaillère 42 solidaire de la poutre 33, il assure le mouvement de translation de l'équipage mobile. Un dispositif de galets 43 assure le maintien tout en permettant la translation de l'équipage mobile sur la poutre 33. Les galets 43 sont fixés sur le châssis par un axe 45 muni de blocs élastiques 46 pour compenser l'usure des galets. L'autre pignon 38, par l'intermédiaire d'un axe 47, entraîne en rotation le palonnier 48 qui porte les ventouses 2. Un cardan ou rotule 3, fixé entre la ventouse 2 et le palonnier 48, permet une adaptation sur les parois courbées.

Un capteur de déplacement 49, composé par une sonde à effet HALL, envoie une impulsion à chaque passage de dent de la crémaillère 42.

Un codeur de position absolue 50 fournit la position angulaire de la rotation du palonnier 48 par rapport au châssis 44. Une sonde à ultra-sons 51 permet l'appréciation de la distance ventouses/paroi.

Une autre variante, très intéressante de l'invention, rendue possible uniquement par la rotation du second équipage, est la suivante :

L'outil 60 est porté sur le second équipage à l'aide d'un bras 61 rigide ou articulé comme représenté en tirets sur la figure 2. Ce bras passe au-dessus du premier équipage. Lorsque celui-ci est fixe, les dispositifs 6, 7 de déplacement du second équipage servent à donner à l'outil des déplacements de translation et de rotation le long de la surface. Lorsque les ventouses 2 du second équipage sont immobilisées, par actionnement des vérins 1, les mêmes dispositifs 6, 7 servent au déplacement du premier équipage. Suivant une modalité avantageuse, le bras 61 porte en plus une ventouse supplémentaire 62, qui peut venir en action à la place de l'outil, par exemple grâce à une tête montée à rotation. Cette ventouse supplémentaire 62 complète l'effet des ventouses 2 portées par le second équipage et elle facilite les déplacements grâce à son bras de levier important.

On notera par ailleurs que, dans ce qui précède on a supposé que les poutres 4, 5 formaient le premier équipage et le palonnier 48 restait dans des pans parallèles. Il est avantageux dans le cas de surfaces à courbure très forte, ou bien comportant des arêtes saillantes ou rentrantes, de prévoir que le palonnier 48 peut également pivoter autour d'un axe parallèle à son plan, et qu'il est équipé de moyens d'actionnement pour un tel pivotement (non représentés). Une telle disposition est intéressante notamment pour le nettoyage intérieur de cuves ou de cales.

Il ressort de ce qui a été exposé plus haut que la stabilité de l'engin dépend des efforts exercés entre le robot et la paroi au cours du traitement de celle-ci.

Pour réduire la force transmise au robot lors d'un travail de brossage ou décapage, exigeant une pression de travail importante sans que des efforts trop importants soient transmis aux ventouses, il est préférable de disposer sur l'outil lui-même des moyens destinés à assurer cette pression de travail. Ces moyens sont avantageusement constitués par un propulseur à turbines 65 (fig. 10 et créent un courant d'eau dans une direction perpendiculaire à la surface en s'écartant de celle-ci, ce qui engendre par réaction une force qui tend à appuyer l'outil 60 contre la surface. L'outil peut être une brosse tournante montée sur le même axe que la turbine, et qui tourne à la même vitesse ou à une vitesse différente grâce à un réducteur 66.

Un autre élément qui intervient dans la stabilité de l'engin et la précision de sa marche est la masse des dispositifs d'adhérence appelés « ventouses » dans le présent texte, en particulier quand ils sont placés au bout des vérins 1 ou des bras 61, en raison du porte-à-faux important.

On a été ainsi amené à concevoir la ventouse qui fait l'objet de la figure 9. Celle-ci comprend une plaque support 70 qui porte à sa périphérie des aimants permanents 71 du type ferrite. Cette matière ajoute à ses propriétés magnétiques de bonnes qualités anti-dérapantes. Au centre, une membrane souple 72 est fixée sur une paroi annulaire 73 elle-même fixée de façon étanche sur la plaque support 70. La membrane délimite ainsi une chambre fermée 74, reliée par un conduit 75 à une source d'alimentation au fluide de travail, lequel est de préférence un liquide non lubrifiant comme un mélange eau-glycol. Sur la zone centrale de la face intérieure de la membrane 72 est collée une plaque 76 de matière mousse qui a double rôle : d'une part, elle donne de la rigidité à la partie centrale de la membrane et maintient sa forme plane, d'autre part, elle constitue un amortisseur de pression qui laisse le temps d'intervenir en cas de petite fuite accidentelle. Sur la moitié droite de la figure 7, la chambre 74 est une dépression, et la membrane 72 forme une ventouse, dont l'effet s'ajoute à celui des aimants 71 pour maintenir l'ensemble en contact avec la paroi. Sur la moitié gauche de la figure, la chambre 74 est en surpression, les aimants 71 sont écartés de la paroi et l'ensemble n'a plus d'adhérence.

La présente invention s'applique aux travaux de peinture, de nettoyage et préparation des parois verticales et horizontales, comme les coques de navires, les carlingues d'avions, les plafonds d'immeubles sans échafaudages, pour la peinture par feutre ou aérosol à des fins d'indication ou de décoration sur des vitrines, par exemple, pour le nettoyage des vitres et façades des immeubles, pour la vérification des citernes sur bateaux, dans ce cas, l'outil est remplacé par une caméra, pour les vérifications ou les remises en état, sous l'eau, des plates-formes marines, pour l'intervention sur charpentes métalliques de bâtiments, montage de charpentes ou pose de couvertures par le grutier à distance.

## Revendications

1. Appareil autonome capable de se déplacer le long d'une surface non horizontale, et comprenant un premier équipage pourvu de premiers moyens de maintien capables de fixer l'appareil sur la surface de façon amovible ; et comportant plusieurs dispositifs d'adhérence (2') formant un premier polygone, un second équipage (8), pourvu de seconds moyens de maintien capables de fixer l'appareil sur la surface de façon amovible, ces seconds moyens de maintien comportant également plusieurs dispositifs d'adhérence (2) formant un second polygone qui peut se déplacer à l'intérieur du premier polygone ; des moyens permettant d'obtenir un déplacement relatif, par translation et par rotation dans un plan parallèle à la surface, des premier et second équipage ; et des moyens capables de déplacer au moins un desdits équipages par rapport à ses propres moyens de maintien dans une direction perpendiculaire à la surface, ledit appareil étant équipé d'un outil (60) de traitement ou d'inspection, caractérisé en ce que le premier polygone est sensiblement indéformable, en ce qu'il est prévu des moyens pour limiter les déplacements relatifs des équipages pour que le centre des dispositifs d'adhérence du premier polygone se trouve toujours à l'intérieur du second polygone ou à faible distance de celui-ci, en ce que l'outil (60) de traitement ou d'inspection (62) est monté de façon à pouvoir exécuter un mouvement pivotant par rapport audit premier équipage.

2. Appareil selon la revendication 1, caractérisé en ce que ledit outil de traitement ou d'inspection est relié à l'un des deux équipages par un bras robotique articulé à plusieurs articulations pourvues chacune de moyens de commande.

3. Appareil selon la revendication 1, caractérisé en ce que ledit outil (60) de traitement ou d'inspection est relié au second équipage par un bras (61) passant au-dessus du premier équipage, et en ce que les moyens permettant d'obtenir le déplacement relatif par rotation des deux équipages sont calculés pour permettre d'obtenir également du mouvement de translation et rotation du bras portant l'outil par rapport au premier équipage.

4. Appareil selon la revendication 2 ou 3, caractérisé en ce que ledit bras portant l'outil porte, en outre, un dispositif d'adhérence supplémentaire.

5. Appareil selon l'une des revendications 1 à 4, caractérisé en ce que les moyens (1) capables de déplacer un équipage dans une direction perpendiculaire à la surface par rapport aux moyens de maintien (2) reliés à cet équipage sont portés par le premier équipage (4, 5).

6. Appareil selon l'une des revendications 1 à 5, et comportant un ordinateur de commande, caractérisé en ce que l'appareil est équipé de capteurs (10) sensibles aux translations et rotations relatives des deux équipages et en ce que l'ordinateur est équipé d'une mémoire (18) capable d'enregistrer les translations et rotations, ainsi que les périodes d'actionnement des différents moyens de maintien, l'ordinateur étant également équipé de moyens pour déduire de ces données des indications sur le mouvement résultant de l'appareil et sur sa position actuelle.

7. Appareil selon la revendication 1, caractérisé en ce que ledit outil est solidaire de moyens (65) créant un courant d'eau dans une direction perpendiculaire à la paroi en s'écartant de celle-ci pour engendrer par réaction, une force tendant à appuyer l'outil contre la surface.

8. Appareil selon la revendication 1, caractérisé en ce que les moyens de maintien comprennent des aimants permanents (71) associés à une chambre de pression variable, la paroi de cette chambre qui est tournée vers la surface étant constituée par une paroi souple (72) qui forme ventouse quand la chambre est en dépression, et qui écarte les aimants de la surface quand la chambre est en surpression.

**Claims**

1. An autonomous apparatus capable of moving along a non-horizontal surface and comprising a first element provided with first holding means capable of fixing the apparatus on the surface in movable fashion ; and comprising a plurality of adhering means (2') forming a first polygon, a second element (8) provided with second holding means capable of fixing the apparatus on the surface in movable fashion, said second holding means also comprising a plurality of adhering means (2) forming a second polygon which can move inside the first polygon ; means allowing for relative displacement of the first and second elements, by translation and by rotation on a plane parallel to the surface ; and means capable of moving at least one of said elements relative to its own holding means in a direction perpendicular to the surface, said apparatus being equipped with a tool (60) for treatment or inspection, characterized in that the first polygon is substantially undeformable, in that it is provided with means for limiting the relative displacements of the elements in order that the center of the adhering means of the first polygon is always located inside the second polygon or a small distance therefrom, in that the tool (60) for treatment or inspection (62) is mounted in such a way as to be capable of performing a pivoting movement relative to said first element.

2. An apparatus according to claim 1, characterized in that said tool for treatment or inspection is connected to one of the two elements by a robot arm linked to a plurality of joints each provided with operating means.

3. An apparatus according to claim 1, characterized in that said tool (60) for treatment or inspection is connected to the second element by an arm (61) passing above the first element, and in that the means allowing for the relative displacement by rotation of the two elements are calculated to permit to allow also for translational movement and rotation of the arm bearing the tool relative to the first element.

4. An apparatus according to claim 2 or 3, characterized in that said arm bearing the tool also bears a supplementary adhering means.

5. An apparatus according to any of claims 1 to 4, characterized in that the means (1) capable of moving an element in a direction perpendicular to the surface relative to the holding means (2) connected to this element are borne by the first element (4, 5).

6. An apparatus according to any of claims 1 to 5, and comprising a control computer, characterized in that the apparatus is equipped with sensors (10) sensible to the relative translations and rotations of the two elements, and in that the computer is equipped with a memory (18) capable of registering the translations and rotations, as well as the operation periods of the various holding means, the computer also being equipped with means for deducing from these data information on the resulting movement of the apparatus and on its current position.

7. An apparatus according to claim 1, characterized in that said tool is connected with means (65) creating a current of water in a direction perpendicular to the wall and moving away from the latter to generate by reaction a force tending to urge the tool against the surface.

8. An apparatus according to claim 1, characterized in that the holding means comprise permanent magnets (71) associated with a variable pressure chamber, the wall of this chamber that faces the surface being constituted by a flexible wall (72) that forms a suction cup when the chamber is in low pressure, and which removes the magnets from the surface when the chamber is in overpressure.

**Patentansprüche**

1. Autonome Vorrichtung, die sich entlang einer nicht-waagrechten Fläche bewegen kann und die ein erstes Gestell aufweist, das mit einer ersten Halteanordnung versehen ist, welche die Vorrichtung lösbar auf der Fläche halten kann und das mehrere Haftglieder (2') aufweist, die ein erstes Polygon bilden, die ein zweites Gestell (8) aufweist, das mit einer zweiten Halteanordnung versehen ist, die die Vorrichtung lösbar auf der Fläche halten kann, wobei diese zweite Halteanordnung ebenfalls mehrere Haftglieder (2) aufweist, die ein zweites Polygon bilden, das sich im Inneren des ersten Polygons bewegen kann ; mit einer Anordnung, die eine Relativverschiebung, mittels Translation und mittels Rotation in einer Ebene parallel zur Fläche, des ersten und des zweiten Gestells ermöglicht ; und mit einer Anordnung, die ein Verschieben wenigstens eines der Gestelle bezüglich deren Halteanordnung in einer Richtung senkrecht zur Fläche ermöglicht, wobei die Vorrichtung mit einem Werkzeug (60) zur Behandlung oder Inspektion versehen ist, dadurch gekennzeichnet, daß das erste Polygon im wesentlichen nichtdeformierbar ist, daß es mit einer Anordnung zur Begrenzung der Relativverschiebung der Gestelle versehen ist, damit sich das Zentrum der Halteglieder des ersten Polygons ständig im Inneren des zweiten Polygons oder in geringem Abstand von ihm befindet und daß das Werkzeug (60) zur Behandlung oder Inspektion derart angeordnet ist, daß es eine Schwenkbewegung bezüglich des ersten Gestells ausführen kann.

2. Vorrichtung nach Anspruch 1, dadurch gekennzeichnet, daß das Werkzeug zur Behandlung oder Inspektion mit einem der Gestelle über einen Roboterarm verbunden ist, der an mehreren Gelenken angelenkt ist, wobei jedes mit einer Steueranordnung versehen ist.

3. Vorrichtung nach Anspruch 1, dadurch gekennzeichnet, daß das Werkzeug (60) zur Behandlung oder Inspektion mit dem zweiten Gestell über einen Arm (61) verbunden ist, der oberhalb des ersten Gestells verläuft und daß die erste Anordnung, die eine Relativverschiebung mittels Rotation der beiden Gestelle ermöglicht, derart ausgelegt ist, daß sie gleichzeitig eine Translationsbewegung und eine Rotationsbewegung des das Werkzeug tragenden Armes bezüglich des ersten Gestells ermöglicht.

4. Vorrichtung nach Ansprüchen 2 oder 3, dadurch gekennzeichnet, daß dieser das Werkzeug tragende Arm außerdem ein zusätzliches Haftglied trägt.

5. Vorrichtung nach einem der Ansprüche 1 bis 4, dadurch gekennzeichnet, daß die Anordnung (1) zur Verschiebung eines Gestells in eine Richtung senkrecht zur Fläche bezüglich der mit diesem Gestell verbundenen Halteanordnung (2) vom ersten Gestell (4, 5) getragen ist.

6. Vorrichtung nach einem der Ansprüche 1 bis 5, die einen Steuerrechner aufweist, dadurch gekennzeichnet, daß die Vorrichtung mit Fühlern (10) versehen ist, die auf die relativen Translationen und Rotationen der beiden Gestelle ansprechen und daß der Rechner mit einem Speicher (18) versehen ist, zur Speicherung der Translationen und Rotationen sowie der Betätigungsperioden der verschiedenen Halteanordnungen, wobei der Rechner außerdem mit einer Anordnung versehen ist, um aus diesen Daten Anzeigen abzuleiten bezüglich der resultierenden Bewegung der Vorrichtung und ihrer aktuellen Stellung.

7. Vorrichtung nach Anspruch 1, dadurch gekennzeichnet, daß das Werkzeug fest mit einer Anordnung (65) verbunden ist, die einen Wasserstrahl in einer Richtung senkrecht zur Wand abgibt und sich dabei von dieser entfernt, um so durch eine Gegenreaktion eine Kraft zu erzeugen, die das Werkzeug auf die Fläche drückt.

8. Vorrichtung nach Anspruch 1, dadurch gekennzeichnet, daß die Halteanordnung Permanentmagnete (71) aufweist, die mit einer Kammer variablen Drucks verbunden sind, wobei die Wand dieser Kammer, die zur Oberfläche zeigt, eine elastische Wand (72) ist, die einen Saugnapf bildet, wenn die Kammer einen Unterdruck aufweist und die die Magneten von der Fläche entfernt, wenn die Kammer einen Überdruck aufweist.

FIG 1

FIG 2

FIG 3

FIG 4

FIG 5

FIG 6

FIG 7

FIG.8

FIG.9

FIG.10